# EUROPEAN PATENT APPLICATION

(11) **EP 2 112 622 A1**
(43) Date of publication of application: **28.10.2009**
(21) Application number: 09001168.5
(22) Date of filing: 28.01.2009
(51) Int. Cl.: G06Q 10/00

(54) **Information management system, form definition management server and information management method**

(30) Priority: 24.04.2008 JP 2008114187
(71) Applicant: Hitachi Ltd., Chiyoda-ku Tokyo 100-8280 (JP)
(72) Inventor: Ikeda, Hisashi, Tokyo 100-8220 (JP); Furukawa, Naohiro, Tokyo 100-8220 (JP); Konishi, Kosuke, Machida-shi Tokyo 195-0053 (JP); Nakagami, Shoichi, Tokyo 100-8220 (JP)
(74) Representative: Strehl Schübel-Hopf & Partner

(57) **Abstract**

Provided is an information management system for generating a form handled in a workflow according to a form generated without considering the workflow. The information management system includes a first management server for managing form definition information including definition of a form which is used in a business process workflow. The first management server determines an approval region to be added onto a form received in the form of paper; determines a position where the determined approval region is to be printed on the form; gives an instruction to print the determined approval region at the determined position; and registers definition of the approval region to be printed in the form definition information.

## Description

### CLAIM OF PRIORITY

The present application claims priority from Japanese patent application 2008-114187 filed on April 24, 2008, the content of which is hereby incorporated by reference into this application.

### BACKGROUND OF THE INVENTION

This invention relates to an information management system, and more particularly, to a preprocessing technique for handling a paper document in a business workflow.

A pen-type input device (e.g. a digital pen) that digitally acquires a path of a pen tip has been put to practical use. Such a type of pen makes possible to digitalize hand-written documents and to keep a record of who wrote what information and when it was written on the paper.

The current digital pen systems define information related to positions of information to be printed and the content when digital documents are printed, and the content is digitalized within a range of the definition. The digitalized data is then recorded. In other words, the written content within a structure of a printed range can be read by an OCR technique, and handwriting in a certain area can be recorded as a signature. Even in a case where an area is not defined accurately, what is written in the area can be determined by using the structure of the range and its title.

The digital pen inputs an acquired pen tip path into a computer. Examples of the digital pen include the "Anoto pen" developed by Anoto AB in Sweden. The detail of the digital pen is describe in WO 01/71473 A1. The digital pen has an advantage that it is possible even for a user, who is not used to using a keyboard or a mouse, to use the pen easily, and is therefore expected to be applied to a document management system disclosed in JP 2008-41006 A and application tasks in the electronic government and other fields.

From the viewpoint of internal control in business, there is a need to trace tasks using a workflow management system. As such a workflow system, a document management system, for example, is described in JP 2006-350627 A.

Application of the digital pen techniques to the document management system for managing the workflows makes possible to trace workflow information on who gave approval and when the approval was given, in the middle of tasks by using forms (digital files) generated to be added into the workflow.

### SUMMARY OF THE INVENTION

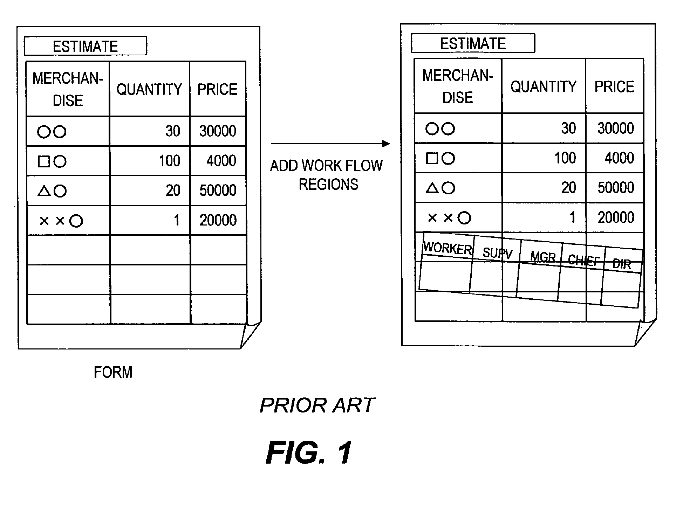

However, the forms generated to be added into the workflow in conventional techniques are not always suitable for workflows in actual business tasks. For example, as shown in Fig. 1, in a case where a paper form without the approval region is processed according to the business workflow, the approval region is provided by a stamp or and the like on the paper form in order to get signatures of authorizers for giving approval. Thus, forms generated without considering to be added into the workflow often cause the providing of the approval region later.

For example, in a purchase department, the approval region is stamped on an estimation form sent from a client and approvals are given in the approval region in order to perform the tasks in a workflow. The method causes a problem that the workflow management system is unable to manage information about where documents are in the workflow (which is the current status of the process).

A representative aspect of this invention is as follows. That is, there is provided an information management system including a first management server for managing form definition information including definition of a form which is used in a business process workflow. The first management server determines an approval region to be added onto a form received in the form of paper; determines a position where the determined approval region is to be printed on the form; gives an instruction to print the determined approval region at the determined position; and registers definition of the approval region to be printed in the form definition information.

According to an embodiment of this invention, a form which can be handled in a workflow system is generated based on the form generated without considering to be added into the workflow.

### BRIEF DESCRIPTION OF THE DRAWINGS

The present invention can be appreciated by the description which follows in conjunction with the following figures, wherein:
Fig. 1 is an explanatory diagram showing a paper form used in a conventional workflow;
Fig. 2 is a configuration diagram showing an information management system according to the embodiment of this invention;
Fig. 3 is a block diagram showing a configuration of a hybrid document management server according to the embodiment of this invention;
Fig. 4 is a block diagram showing a configuration of a client terminal according to the embodiment of this invention;
Fig. 5 is a block diagram showing a configuration of a form definition management server according to the embodiment of this invention;
Fig. 6 is an explanatory diagram showing a data structure of the form definition information according to the embodiment of this invention;
Fig. 7 is an explanatory diagram of coordinate acquisition on paper by a digital pen according to the embodiment of this invention;
Fig. 8 is an explanatory diagram showing an example of a stroke set according to the embodiment of this invention;
Fig. 9A is an explanatory diagram showing a data structure of stroke set information according to the embodiment of this invention;
Fig. 9B is an explanatory diagram showing a data structure of stroke coordinate information according to the embodiment of this invention;
Fig. 10 is a flowchart showing a process outline of the information management system according to the embodiment of this invention;
Fig. 11A is an explanatory diagram showing a type of form handled according to a conventional information management system;
Fig. 11B is an explanatory diagram showing another type of form handled according to the conventional information management system;
Fig. 11C is an explanatory diagram showing yet another type of form handled according to the conventional information management system;
Fig. 12 is an explanatory diagram showing a change in the form definition information stored in a form definition information database according to the embodiment of this invention;
Fig. 13 is an example of preprocessing for adding a paper form into a workflow according to the embodiment of this invention;
Fig. 14 is another example of preprocessing for adding the paper form into the workflow according to the embodiment of this invention;
Fig. 15 is another example of preprocessing for adding the paper form into the workflow according to the embodiment of this invention;
Fig. 16 is another example of preprocessing for adding the paper form into the workflow according to the embodiment of this invention;
Fig. 17 is another example of preprocessing for adding the paper form into the workflow according to the embodiment of this invention;
Fig. 18 is a flowchart showing a process for determining a position of an approval region according to the embodiment of this invention;
Fig. 19 is a flowchart showing a process for understanding form definition according to the embodiment of this invention;
Fig. 20 is an explanatory diagram showing a data structure of hybrid document information according to the embodiment of this invention;
Fig. 21 is an explanatory diagram showing a data structure of document information according to the embodiment of this invention;
Fig. 22 is an explanatory diagram showing a data structure of page information according to the embodiment of this invention;
Fig. 23 is an explanatory diagram showing a data structure of user information according to the embodiment of this invention;
Fig. 24 is an explanatory diagram showing a data structure of group information according to the embodiment of this invention; and
Fig. 25 is an explanatory diagram showing a data structure of permission information according to the embodiment of this invention.

### DETAILED DESCRIPTION OF THE PREFERRED EMBODIMENT

In an embodiment according to this invention described below, disclosed is a method in which a region (hereinafter, an approval region) to be used in the workflow is added onto the form generated without considering to be added into the workflow, and definition of the added approval region is added into definition information of the form, and thus, the form can be handled in the workflow management system (which means the form can be digitally traced).

In particular, in a paper document/ digital file integration management system in which an original of a document and written information of the document are associated and managed, the document being which a dot pattern is added to identify the document and a written position, a new form including an approval region corresponding to the workflow is generated according to the form added into the workflow from outside. Subsequently, definition information of the generated approval region for the workflow is then generated.

Note that, in the embodiment of this invention, the forms added into the workflow may be a form received in the form of conventional paper (without a dot pattern), a form received in the form of paper with a dot pattern and a form received in the form of electric data such as portable document format (PDF) .

With this, the process of the workflow can be digitalized even for the paper documents generated without considering to be added into the workflow without inputting the process of the workflow into a computer. Therefore, a normal task such as giving a signature on the paper document can digitalize the process of the workflow. Accordingly, it is possible to improve the workflow into which many paper forms are added outside of the workflow.

Next, the embodiment of this invention is described with reference to figures.

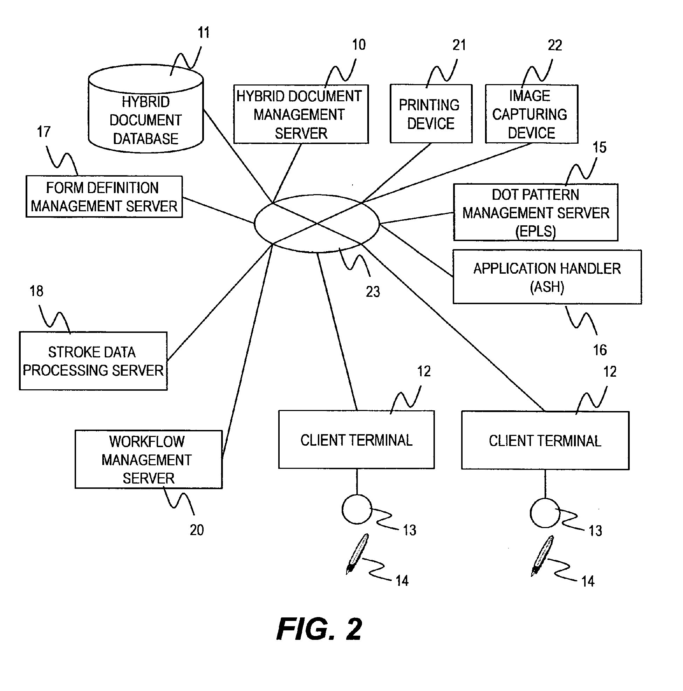

Fig. 2 is a configuration diagram showing an information management system according to the embodiment of this invention.

The information management system according to this embodiment comprises a hybrid document management server 10, a hybrid document database 11, a client terminal 12, a digital pen interface 13, a digital pen 14, a dot pattern management server (EPLS) 15, an application handler (ASH) 16, a form definition management server 17, a stroke data processing server 18, a workflow management server 20, a printing device 21 and an image capturing device 22.

The hybrid document management server 10, the hybrid document database 11, the client terminal 12, the dot pattern management server 15, the application handler 16, the form definition management server 17, the stroke data processing server 18, the workflow management server 20, the printing device 21 and the image capturing device 22 are connected through a network 23.

The hybrid document management server 10 is a computer comprising a CPU, a memory, a storage device and the like, and manages documents handled in the information management system in this embodiment. The hybrid document database 11 is a database in which information on the documents handled in the information management system in this embodiment is registered.

The client terminal 12 is a computer used by each user and comprises a CPU, a memory, a storage device and the like. The client terminal 12 also comprises the digital pen interface 13 which is connected by a wire or wirelessly to the digital pen 14, and functions as an access point for the digital pen 14. The client terminal 12 converts coordinate information acquired by the digital pen 14 into stroke information and transmits the converted stroke information to the hybrid document management server 10.

The digital pen interface 13 is connected to the digital pen 14. The digital pen 14 is capable of writing characters on a paper medium and drawing figures as an ordinary pen is capable. Moreover, the digital pen 14 comprises a micro-camera at its tip to shoot an image of a dot pattern of a position on the paper which comes into contact with the tip. The digital pen 14 provides coordinates at which the dot pattern is present from the shot image of the dot pattern. In addition, the digital pen 14 holds a predetermined pen ID. The digital pen 14 comprises a communication interface connecting the digital pen interface 13 by a wire or wirelessly and transmits the coordinates on the paper and information on the paper to the client terminal 12.

The dot pattern management server 15 is a computer comprising a CPU, a memory, a storage device and the like, and manages a database in which an application and the paper the digital pen 14 uses are associated. The application handler 16 is a computer comprising a CPU, a memory, a storage device and the like, and identifies the application to be used for the stroke information to transmit the stroke information to the identified application.

The form definition management server 17 manages information on the forms used in the workflow which is managed by the workflow management server 20. The stroke data processing server 18 is a computer including a CPU, a memory, a storage device and the like, and converts the stroke information into information necessary for the workflow process.

The workflow management server 20 is a computer comprising a CPU, a memory, a storage device and the like, and manages the process of the task according to the predetermined workflow by using a workflow information database.

The printing device 21 is a printing device for printing the forms to be added into the workflow. The image capturing device 22 is an image capturing device for acquiring image data of the forms to be added into the workflow.

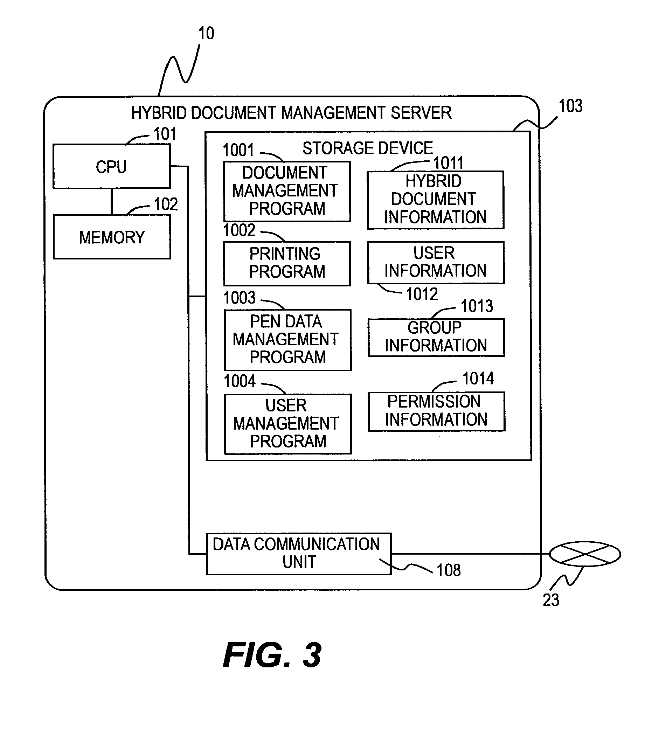

Fig. 3 is a block diagram showing a configuration of the hybrid document management server 10 according to the embodiment of this invention.

The hybrid document management server 10 comprises a CPU 101, a memory 102, a storage device 103 and a data communication unit 108.

The CPU 101 executes various kinds of processing by reading and executing various programs stored in the storage device 103. The memory 102 includes a work area in which data used by the CPU 111 in the various kinds of processing is stored temporarily.

The storage device 103 comprises a nonvolatile storage medium (magnetic disk drive, for example) and stores a document management program 1001, a print program 1002, a pen data management program 1003 and a user management program 1004. Those programs are loaded into the memory 102 and then are executed by the CPU 101, thereby performing the various kinds of processing.

In addition, the storage device 103 stores hybrid document information 1011, user information 1012, group information 1013 and permission information 1014.

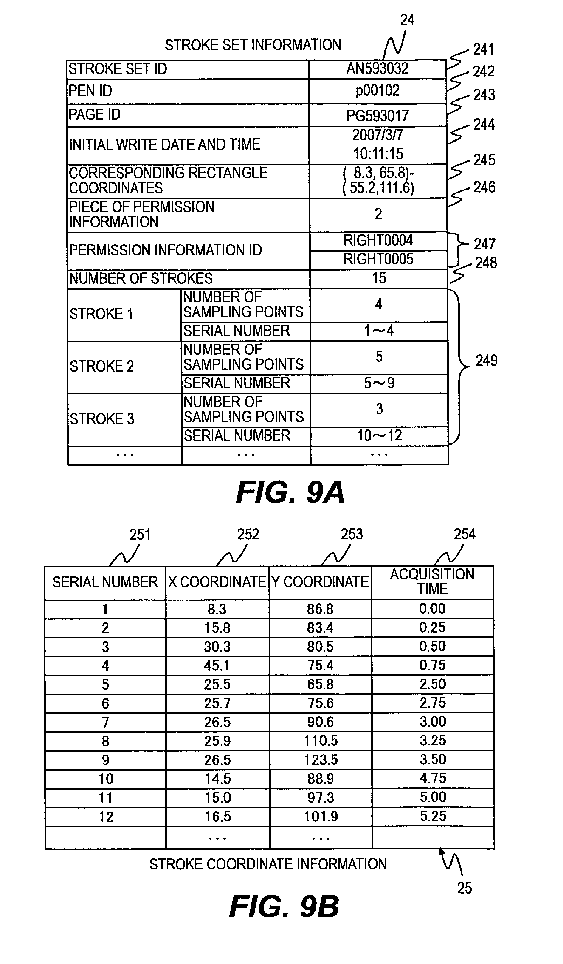

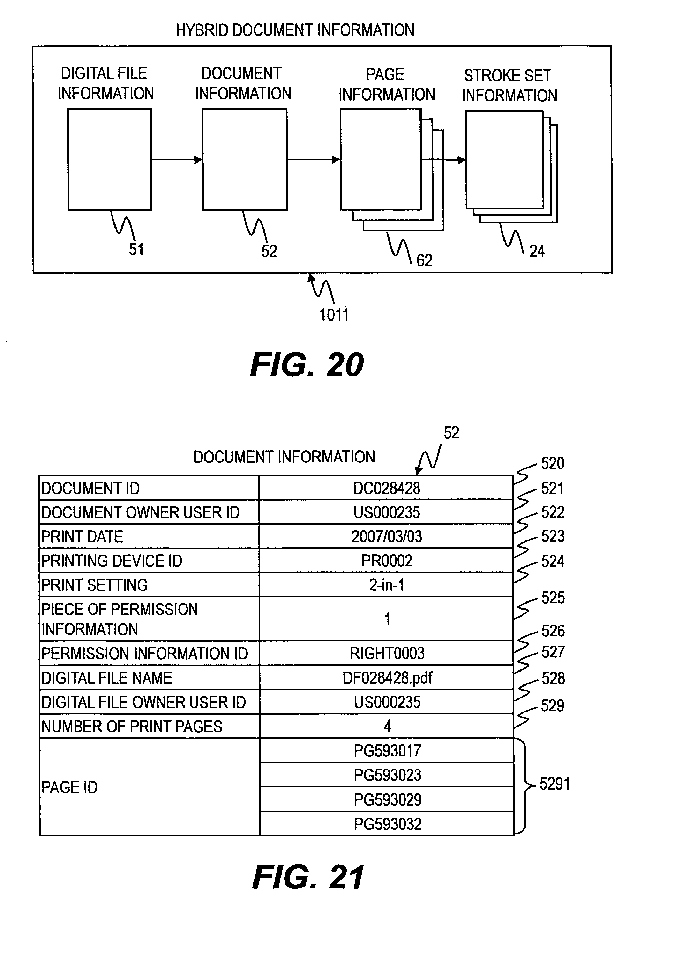

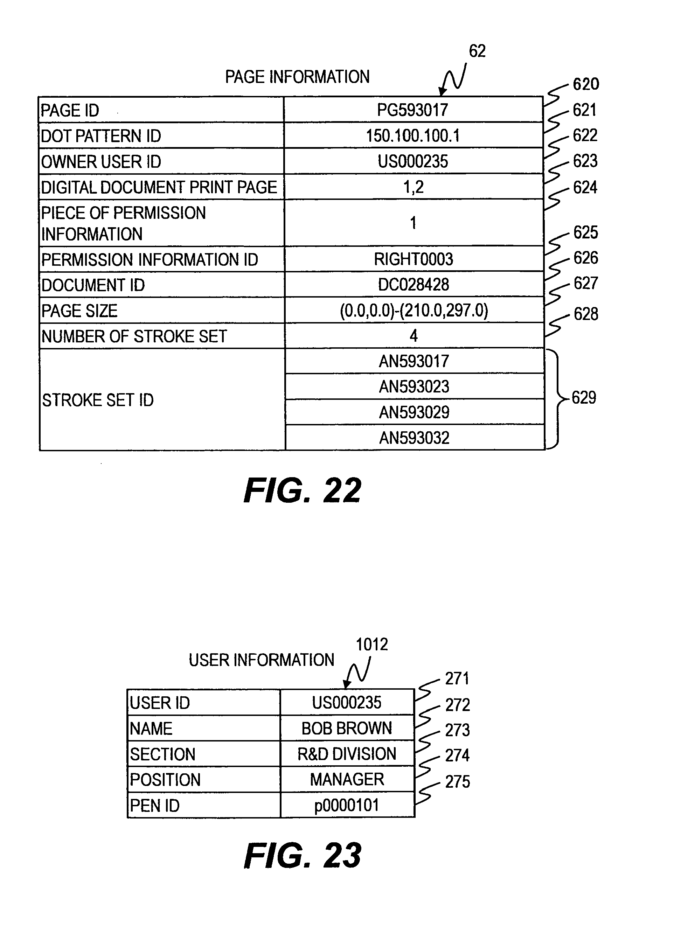

The hybrid document information 1011, as will be described in Fig. 20, includes digital file information 51, document information 52 (shown in Fig. 21), page information 62 (shown in Fig. 22) and stroke set information 24 (shown in Fig. 9A).

The user information 1012 is information indicating user attributions (user ID, name, section, position and the like) and an identifier of a pen that the user possesses. The group information 103 is information indicating a group of users such as sections and teams. The permission information 1014 is information indicating access authority to the hybrid document.

The document management program 1001 manages the hybrid document information 1011. The pen data management program 1003 manages stroke set information 24 included in the hybrid document information 1011. The user management program 1004 manages the user information 1012 and manages users (for example, permission for system log-in) by referring to the user information 1012.

The data communication unit 108 is an interface for communicating with other devices through the network 23. An example is a network card that is capable of performing communication using a TCP/IP protocol. The hybrid document management server 10 communicates with devices such as the client terminal 12 connected to the network 23 through the data communication unit 108.

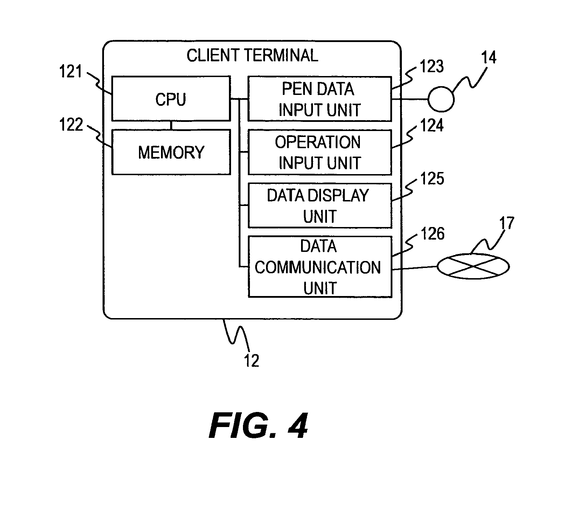

Fig. 4 is a block diagram showing a configuration of the client terminal 12 according to the embodiment of this invention.

The client terminal 12 comprises a CPU 121, a memory 122, a pen data input unit 123, an operation unit 124, a data display unit 125 and a data communication unit 126.

The CPU 121 executes various kinds of processes by reading and executing various kinds of programs stored in the storage device (not shown). The memory 122 includes a work area in which data used by the CPU 121 in the various kinds of processing is stored temporarily. Moreover, the memory 122 temporarily stores data transmitted from the hybrid document management server 10 and the digital pen 14.

The pen input unit 123 is connected to the digital pen interface 13 wirelessly (using Bluetooth or a wireless LAN, for example) or by a wire (using a USB protocol, for example) and collects information including coordinates acquired by the digital pen 14.

The operation input unit 124 is, for example, a keyboard and is used by a user to input information. The data display unit 125 is constructed using, for example, a liquid crystal display and displays contents, such as a document, acquired from the hybrid document management server 10.

The data communication unit 126 is a network interface such as a LAN card that is capable of performing communication using a TCP/IP protocol. With this construction, the client terminal 12 is able to communicate with the hybrid document management server 10 through the network 23.

Note that, the pen input unit 123 and the data communication unit 126 may be the same interface.

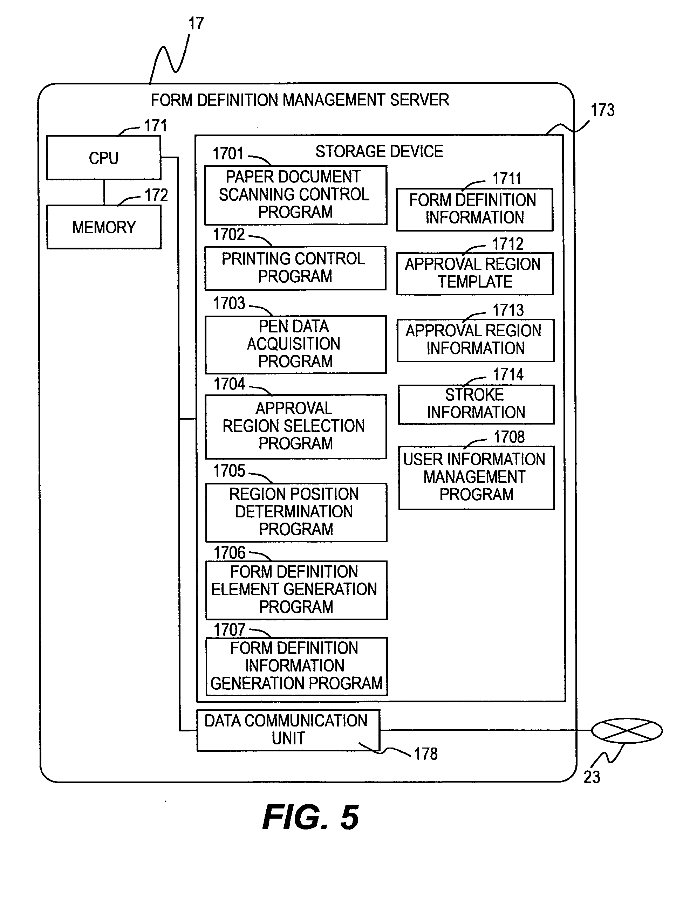

Fig. 5 is a block diagram showing a configuration of the form definition management server 17 according to the embodiment of this invention.

The form definition management server 17 comprises a CPU 171, a memory 172, a storage device 173 and a data communication unit 178.

The CPU 171 reads and executes various programs stored in a storage device (not shown), thereby performing various kinds of processing. The memory 172 includes a work area in which data used by the CPU 171 in the various kinds of processing is stored temporarily.

The storage device 173 is constructed by a nonvolatile storage medium (magnetic disk drive, for example) and stores a paper document scanning control program 1701, a printing control program 1702, a pen data acquisition program 1703, an approval region selection program 1704, a region position determination program 1705, a form definition element generation program 1706, a form definition information generation program 1707 and an user information management program 1708. Those programs are loaded into the memory 172 and then are executed by the CPU 171, thereby performing the various kinds of processing.

The storage device 173 also stores form definition information 1711, an approval region template 1712, approval region information 1713 and stroke information 1714.

The paper document scanning control program 1701 controls acquiring images of the paper (the form) by the image capturing device 22. The printing control program 1702 controls printing forms by the printing device 21.

The pen data acquisition program 1703 acquires the dot pattern on the paper shot by the digital pen 14, calculates absolute coordinates of the form by analyzing the acquired dot pattern, and then acquires information (a document ID and a page number) on the scanned paper by inquiring the dot pattern management server 15.

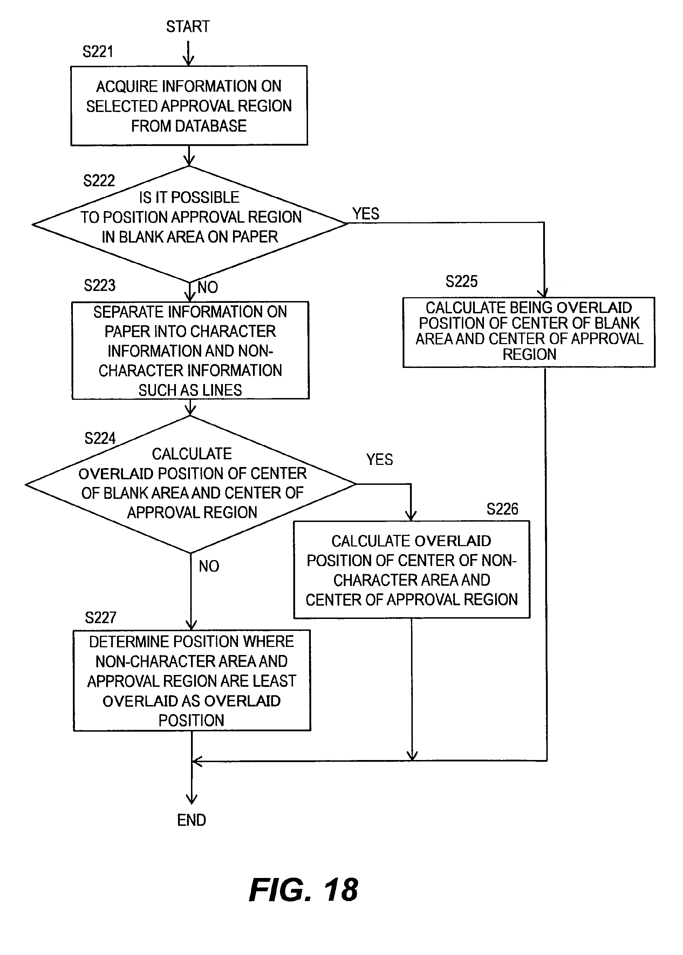

The approval region selection program 1704 displays templates of the approval region acquired from the approval region template 1712 to the user in order to promote the user to select an approval region template. The region position determination program 1705 determines a position where the approval region is to be added on the form (shown in Fig. 18).

The form definition element generation program 1706 generates definition information of the approval region to be added on the form. The form definition information generation program 1707 generates definition information of the form to be registered and registers the generated definition information in the form definition information 1711.

The user information management program 1708 refers to the user information 1012 stored in the hybrid document management server 10 to manage users (system log-in and the like, for example).

The form definition information 1711 stores the definition (writing area and display area) of the form.

The approval region template 1712 is prepared information on a structure of the frame and sizes of the approval region which is sealed or signed and added in the workflow. When the approval region is actually sealed or signed in the workflow, the position on the paper is determined, and the coordinate information is fixed, thereby generating an instance of the approval region information 1713.

The stroke information 1714 is stroke information related to the form definition (for example, handwritings of the authorizers written in the approval region).

The data communication unit 178 is an interface for communicating with other devices through the network 23. An example is a network card that is capable of performing communication using a TCP/IP protocol. The hybrid document management server 10 communicates with devices such as the client terminal 12 connected to the network 23 through the data communication unit 178.

Fig. 20 is an explanatory diagram showing a data structure of the hybrid document information 1011 stored in the hybrid document management server 10.

The hybrid document information 1011 includes digital file information 51, document information 52, page information 62 and stroke set information 24. The digital file information 51 is associated with the document information 52 by a digital file name 527 and a document ID 520. The document information 52 is associated with page information 62 by the document information IDs 520 and 627, and page IDs 5291 and 620. The page information 62 is associated with the stroke set information 24 by page IDs 243 and 620, and stroke set IDs 629 and 241.

The digital file information 51 is information for managing the digital file stored in the hybrid document management server 10.

Fig. 21 is an explanatory diagram showing a data structure of the document information 52 in the hybrid document information 1011.

The digital file information 51 includes the document ID 520, a document owner user ID 521, a print date 522, a printing device ID 523, a print setting 524, piece of permission information 525, a permission information ID 526, a digital file name 527, a digital file owner user ID 528, the number of print pages 529 and the page ID 5291.

The document ID 520 is a unique identifier for identifying the document. The document owner user ID 521 is a unique identifier for identifying the owner user of the document.

The print date 522 is a date when the document is printed. The printing device ID 523 is a unique identifier of the printing device which is used to print the document. The print setting 524 shows an example of printing the document. For example, as shown in Fig. 21, the printing device is set to "2-in-1" which indicates that two pages of the digital file are printed in one page.

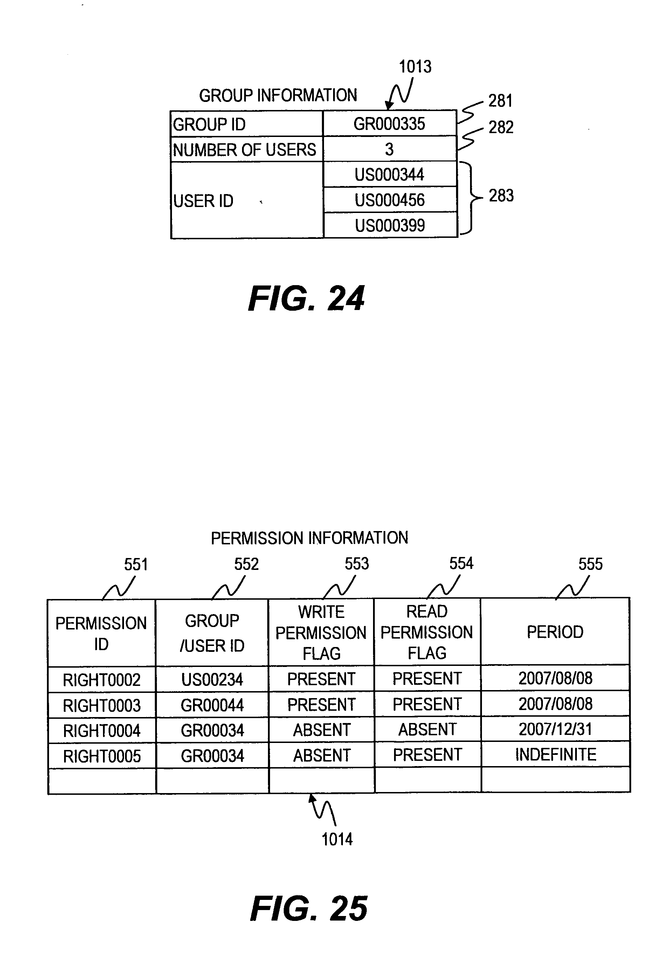

The piece of permission information 525 shows the number of permission which is set to the document. The number of permission information IDs 526, whose number is equal to the pieces of permission information 525, is recorded. The permission information ID 526 is an identifier of permission which is set to the document. The permission is to write into and to read from the document (See Fig. 25).

The digital file name 527 is a unique identifier for identifying the digital file of the document. The digital file owner user ID 528 is a unique identifier for identifying the owner of the digital file of the document.

The number of print pages 529 shows the number of pages included in the document. The number of page IDs 5291, whose number is equal to the number of the print pages 529, is recorded. The page ID 5291 is a unique identifier for identifying pages included in the document.

Fig. 22 is an explanatory diagram showing a data structure of the page information 62 included the hybrid document information 1011 according to the embodiment of this invention.

The page information 62 includes a page ID 620, a dot pattern ID 621, an owner user ID 622, a digital document print page 623, piece of permission information 624, a permission information ID 625, a document information ID 626, a page size 627, number of stroke set 628 and the stroke set ID 629.

The page ID 620 is a unique identifier for identifying the page. The dot pattern ID 621 is a unique identifier for identifying the dot pattern added to the page.

The owner user ID 622 is a unique identifier for identifying a user who owns the page. The digital document print page 623 is the pages of the digital file printed on the page. For example, as shown in Fig. 22, the printing device is set to "1, 2" which indicates that page 1 and page 2 of the digital file are printed.

The piece of permission information 624 shows the number of permission set to the page. The number of permission information IDs 625, whose number is equal to the pieces of permission information 624, is recorded. The permission information ID 625 is an identifier of permission which is set to the page. The permission is to write into and to read from the document (See Fig. 25).

The document information ID 626 is an identifier of the document which includes the page. The number of document IDs 520 is equal to the pieces of the document information 52. The page size 627 is a size of the page. The number of stroke sets 628 shows the number of the stroke sets included in the page. The number of stroke set IDs 629 is equal to the number of stroke sets 628. The stroke set ID 629 is a unique identifier for identifying the stroke set.

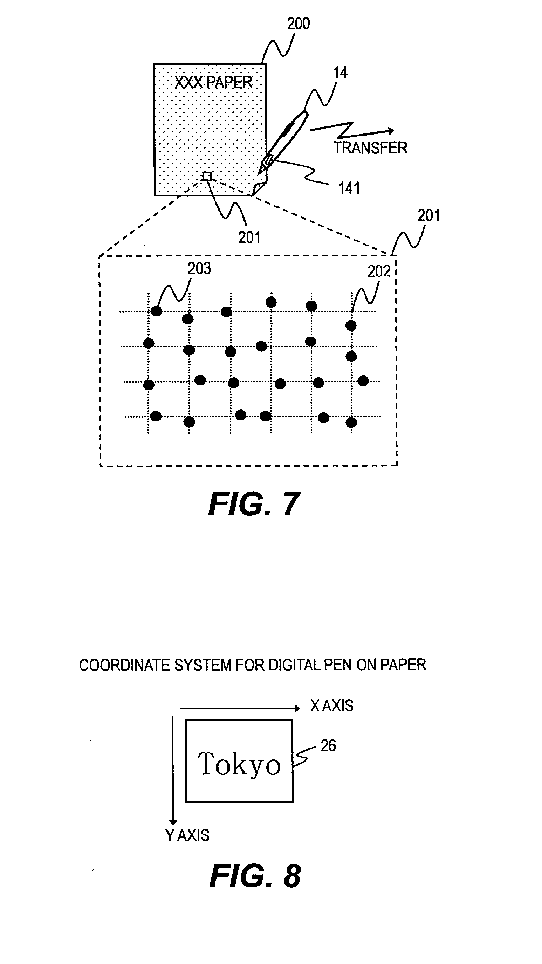

Fig. 7 is an explanatory diagram of coordinate acquisition on paper by the digital pen 14 according to the embodiment of this invention.

The digital pen 14 comprises a CPU, a memory, a communication interface, a camera 141, a battery and a writing pressure sensor. In addition, the digital pen 14 comprises a pen tip with which it is possible to write characters, symbols, and the like on paper with ink or graphite.

The digital pen 14 is used together with paper 200 on which dots 203 for position detection have been printed. Here, the dots 203 will be described by magnifying a part 201 of the paper 200. On the paper 200, a plurality of small dots 203 have been printed. Those dots 203 have been printed at locations displaced from intersections (reference points) 202 of virtual lattice lines upwardly, downwardly, rightwardly, or leftwardly.

When a character or a figure is written on the paper with the digital pen 14, the written character or the like remains on the paper in such a manner that visual recognition is possible. When detecting that the pen tip has come into contact with the paper using the writing pressure sensor, the digital pen 14 shoots an image of the dots 203 printed on the paper with the camera 141. For example, the digital pen 14 shoots an image of an area including six by six dots 203.

The digital pen 14 calculates absolute coordinates, at which the dot pattern exists, from the amount of the displacement of the shot image of the dot pattern. Those absolute coordinates are coordinates at which the dot pattern exists in a vast plane area. The vast plane area is an entire area in which arrangement of dot patterns without an overlay is possible.

The digital pen 14 transmits the calculated absolute coordinates to the client terminal 12. The client terminal 12 transmits the absolute coordinates calculated by the digital pen 14 to the dot pattern management server 15. The dot pattern management server 15 identifies the position (dot pattern ID) of the paper in the vast plane area and coordinates (relative coordinates) on the paper medium based on the absolute coordinates transmitted from the client terminal 12, and transmits the identified dot pattern ID and the relative coordinates to the client terminal 12.

In the manner described above, the client terminal 12 acquires the dot pattern ID and the relative coordinates from the dot pattern shot by the digital pen 14.

By acquiring information on contact locations of the pen tip of the digital pen 14 at predetermined timings (e.g., periodically), it is possible to grasp a movement of the pen tip. The digital pen 14 then transmits the absolute coordinates corresponding to the shot image of the dot pattern, a time of shooting image of the dot pattern and the pen ID to the client terminal 12.

The client terminal 12 acquires the relative coordinates on the paper and information on the paper with which the digital pen 14 is in contact based on the absolute coordinates calculated by the digital pen 14 from the dot pattern management server 15. The client terminal 12 generates a path (stroke information) of the pen tip from the acquired relative coordinates and the time at which the dot pattern is shot.

In addition, the digital pen 14 is not required to use the dot pattern management server 15 in order to identify the relative coordinates and the dot pattern ID. For example, the paper is identified using an identification number printed on the paper, a barcode printed on the paper or an IC tag embedded in the paper. Moreover, a tablet may be used to identify locations (relative coordinates) on the paper. Note that one of the paper identification using an IC tag or the like, and the position identification on the paper using the tablet may be combined with the absolute coordinate identification by the dot pattern management server 15. In this case, it is possible to reduce a load of processing in which the document management system identifies the dot pattern ID and the relative coordinates.

Fig. 8 is an explanatory diagram showing an example of a stroke set 26 according to the embodiment of this invention.

The stroke set 26 shows a set of strokes of characters "NY" written with the digital pen 14. In this embodiment, as shown in Fig. 8, an upper left-hand corner is set as an origin, a horizontal direction is set as an X axis, and a vertical direction is set as a Y axis, thereby determining locations of the strokes.

As described above, the stroke set is a group of mutually related lines (strokes) and is identified based on a write time of the lines and/or position relations among the lines.

Fig. 9A is an explanatory diagram showing a data structure of the stroke set information 24 included in the hybrid document information 1011 according to the embodiment of this invention. Fig. 9A shows stroke set information for the stroke set 26 shown in Fig. 8.

The stroke set information 24 includes a stroke set ID 241, a pen ID 242, a page ID 243, an initial write date and time 244, a corresponding rectangle coordinate 245, piece of permission information 246, permission information ID 247, a number of strokes 248 and stroke information 249.

The stroke set ID 241 is a unique identifier for identifying the stroke set. The pen ID 242 is a unique identifier for identifying the digital pen 14 which is used to write the stroke set. The page ID 243 is a unique identifier for identifying the paper (page) on which the stroke set is written.

The initial write date and time 244 is a date and time of initial writing of the stroke set. The rectangle area 245 is a rectangle area including the stroke set. The rectangle area 245 is defined by relative coordinates of the rectangle including the stroke set on the paper, and is expressed by a coordinate of an upper left-hand corner of the rectangular area and a coordinate of a lower right-hand corner.

The piece of permission information 246 shows the number of permission sets for the stroke set. The number of permission information ID 247, whose number is equal to the pieces of permission information 246, is recorded. The permission information ID 247 is a unique identifier for identifying permission which is set to the stroke set. The permission is to read the stroke set (See Fig. 25).

The number of strokes 248 is the number of lines (strokes) included in the stroke set. The piece of stroke information 249, whose number is equal to the number of strokes 248, is recorded. The stroke information 249 includes the number of sampling points and serial numbers. The number of sampling points is the number of relative coordinates that constitute a corresponding stroke, which has been acquired by the digital pen 14. Each serial number is a unique identifier for identifying the relative coordinates constituting the stroke acquired by the digital pen 14, and is a link to the stroke coordinate information 25 (shown in FIG. 9B).

Fig. 9B is an explanatory diagram showing a data structure of the stroke coordinate information 25 linked to the stroke information 24 which is included in the hybrid document information 1011 according to the embodiment of this invention. All the stroke information is collectively stored as stroke coordinate information 25. Each stroke which constitutes each character is identified by specifying positions in each of the stroke coordinate information to the stroke information 249 included in the stroke set information 24.

The stroke coordinate information 25 includes a serial number 251, an X coordinate 252, a Y coordinate 253 and an acquisition time 254.

The serial number 251 a unique identifier for identifying the relative coordinate acquired by the digital pen 14. The X coordinate 252 is a relative coordinate in a direction of the X axis shown in FIG. 8 and is expressed in units of millimeters, for example. The Y coordinate 253 is a relative coordinate in a direction of the Y axis shown in FIG. 8 and is expressed in units of millimeters, for example. The acquisition time 254 shows the time at which the relative coordinates are acquired by the digital pen 14. Note that, in the example shown in Fig. 9B, in the acquisition time 254, an elapsed time from an initial write time 242 is recorded.

Fig. 23 is an explanatory diagram showing a data structure of the user information 1012 stored in the hybrid document management server 10 according to the embodiment of this invention.

The user information 1012 includes a user ID 271, a name 272, a section 273, a position 274, and a possession pen ID 275.

The user ID 271 is a unique identifier for identifying the user. The name 272 is the name of the user. The section 273 is a section to which the user belongs. The position 274 is a position of the user.

The possession pen ID 275 is a unique identifier for identifying the digital pen 14 possessed by the user.

Fig. 24 is an explanatory diagram showing a data structure of the group information 1013 stored in the hybrid document management server 10 according to the embodiment of this invention.

The group information 1013 includes a group ID 281, number of users 282 and a user ID 283.

The group ID 281 is a unique identifier for identifying a group consisting of more than one user. The number of users 282 shows the number of users constituting the group identified by the group ID. The number of user IDs 283, whose number is equal to the number of users 282, is recorded. The user ID 283 is a unique identifier for identifying a user who belongs to the group.

Fig. 25 is an explanatory diagram showing a data structure of the permission information 1014 stored in the hybrid document management server 10 according to the embodiment of this invention.

The permission information 1014 includes a permission ID 551, a group/user ID 552, a write permission flag 553, a read permission flag 554 and a period 555.

The permission ID 551 is a unique identifier for identifying permission which is set to one of the document, the page or the stroke set. The group/user ID 552 is a unique identifier for identifying a group or a user to be given permission.

The write permission flag 553 shows whether write permission is given to the users constituting the group identified by the recorded group/user ID 552 or the user identified by the recorded group/user ID 552. In short, the write permission flag 553 shows whether writing into the document or the page by the user is permitted or not.

The read permission flag 554 shows whether read permission is given to the users constituting the group identified by the recorded group/user ID 552 or the user identified by the recorded group/user ID 552. In short, the read permission flag 554 shows whether reading the document, the page or the stroke set by the user is permitted or not.

The period 555 shows a period in which the permission is valid.

Each piece of permission information (each entry of the permission information 1014) shows permission to access layer information of the hybrid document. In a case where pieces of the permission information overlay, the permission information of upper level is prioritized. For the upper and lower levels of permission information, the permission information existing at the upper layer is determined to be the upper level. For example, a layer of the page is upper than that of the document; a layer of the form definition embedded in the page is upper than that of the page; and a layer of the stroke set written in the form definition is upper than that of the form definition. In addition, for the form definition, a layer of a form definition set later is upper level. In other words, although the permission information is given to the page, access to the stroke information cannot be made unless the permission information is given to the stroke. The layer information can be set arbitrarily in addition to the order described above. In this case, a priority of an (sealed or signed) approval region written later can be lowered than that of the definition information of the region which has been existing.

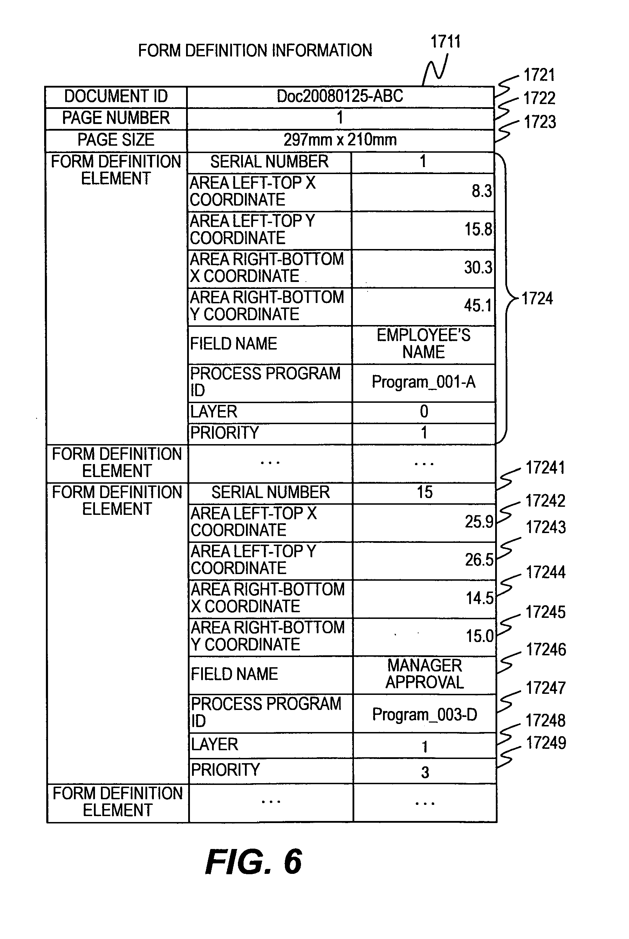

Fig. 6 is an explanatory diagram showing a data structure of the form definition information 1711 according to the embodiment of this invention.

The form definition information 1711 includes a document ID 1721, a page number 1722, a page size 1723 and a form definition element 1724.

The document ID 1721 is a unique identifier for identifying a document including the form. The page number 1722 is a page of the form in the document. The page size 1723 is a size of the page (the form). The form definition element 1724 shows a structure in the form such as fields-to-be-filled-in and display fields which are included in the form.

The form definition element 1724 includes a serial number 17241, an area left-top X coordinate 17242, an area left-top Y coordinate 17243, an area right-bottom X coordinate 17244, an area right-bottom Y coordinate 17245, a field name 17246, a process program ID 17247, a layer 17248 and a priority 17249.

The serial number 17241 is a unique identifier for identifying the form definition element. The area left-top X coordinate 17242, the area left-top Y coordinate 17243, the area right-bottom X coordinate 17244 and the area right-bottom Y coordinate 17245 are coordinates showing four points of a region that the form definition element is displayed on the form.

The field name 17246 is a name of the form definition element. The process program ID 17247 is a program for processing contents written in the form definition element.

The layer 17248 shows a relation of overlaying the form definition element displayed on the form and other form definition element. For example, a layer 0 is a form definition element existed in the digital document or in the original paper document. A layer 1 is a form definition element added when the first printing is performed. Similarly, a layer n is a form definition element added when the nth printing is performed.

The priority 17249 is information showing a definition element to be prioritized when regions of plural definition elements are overlaid. In this embodiment, a definition element having a larger priority value is prioritized.

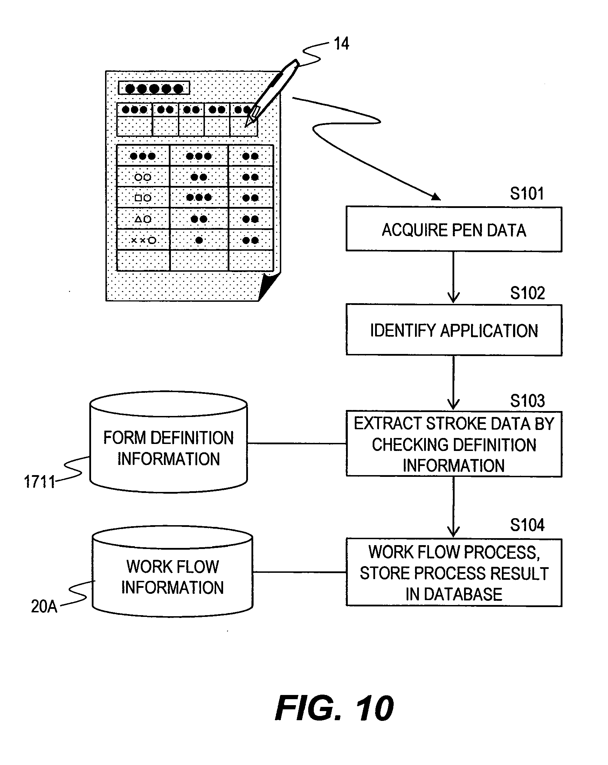

Fig. 10 is a flowchart showing a process outline of the information management system according to the embodiment of this invention.

The digital pen 14 shoots an image of a dot pattern on the paper and identifies the absolute coordinates of the paper which is in contact with the digital pen 14 based on the shot image of dot pattern. Subsequently, the digital pen 14 is connected to the client terminal 12 to transmit the identified absolute coordinates to the client terminal 12.

The client terminal 12 transmits the absolute coordinates identified by the digital pen 14 to the dot pattern management server 15.

Upon reception of the absolute coordinates identified by the digital pen 14 from the client terminal 12, the dot pattern management server 15 acquires coordinates on the paper and information on the paper which is in contact with the digital pen 14. The dot pattern management server 15 then identifies an application (namely, the application which transmits the stroke information acquired by the digital pen 14) with which the paper is used from the acquired information on the paper. The dot pattern management server 15 then transmits the information on the identified application to the client terminal 12 (S102).

Upon reception of the information on the application which transmits the coordinate information from the dot pattern management server 15, the client terminal 12 transmits the coordinate information acquired by the digital pen 14 and the information on the application to be a destination of the coordinate information to the application handler 16.

Upon reception of the stroke information acquired by the digital pen 14 from the client terminal 12, the application handler 16 transfers the received stroke information to the application to be the destination. Note that, in the workflow provided by the information management system according to this embodiment, the stroke data processing server18 receives the stroke information first.

Upon reception of the stroke information from the application handler 16, the stroke data processing server18 acquires definition information of the paper (form) on which the stroke information is written from the form definition information 1711. The stroke data processing server18 then checks a position of the stroke and a position of the approval region (fields for approval, circulation and the like, for example) on the form in order to identify the field in which the received stroke information is written. Subsequently, the stroke data processing server 18 extracts approval information written in the identified field and transmits the extracted approval information to the workflow management server 20 (S103).

Upon reception of the approval information from the stroke data processing server 18, the workflow management server 20 checks the workflow information database 20A to identify the status of the workflow. The workflow management server 20 then stores the identified status of the workflow in the workflow information database 20A (S104).

Here, a form handled with the conventional information management system is described.

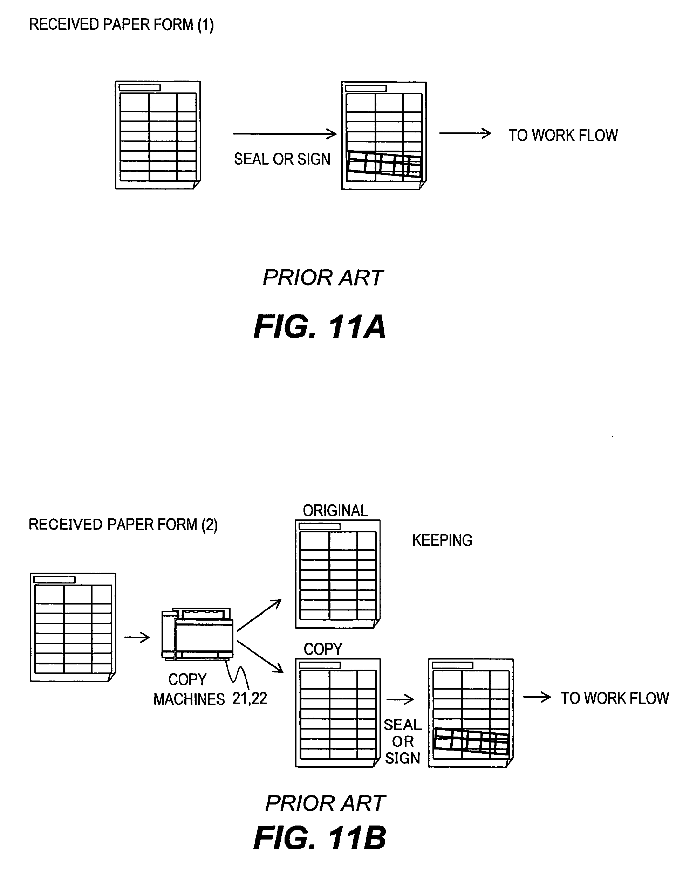

Figs. 11A to 11C are explanatory diagrams showing various kinds of forms handled with the conventional information management system.

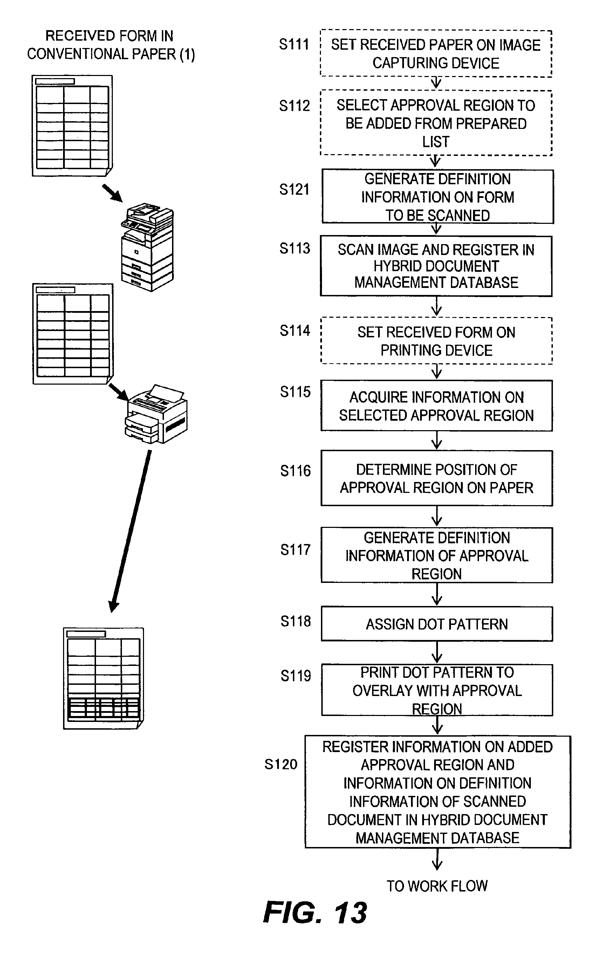

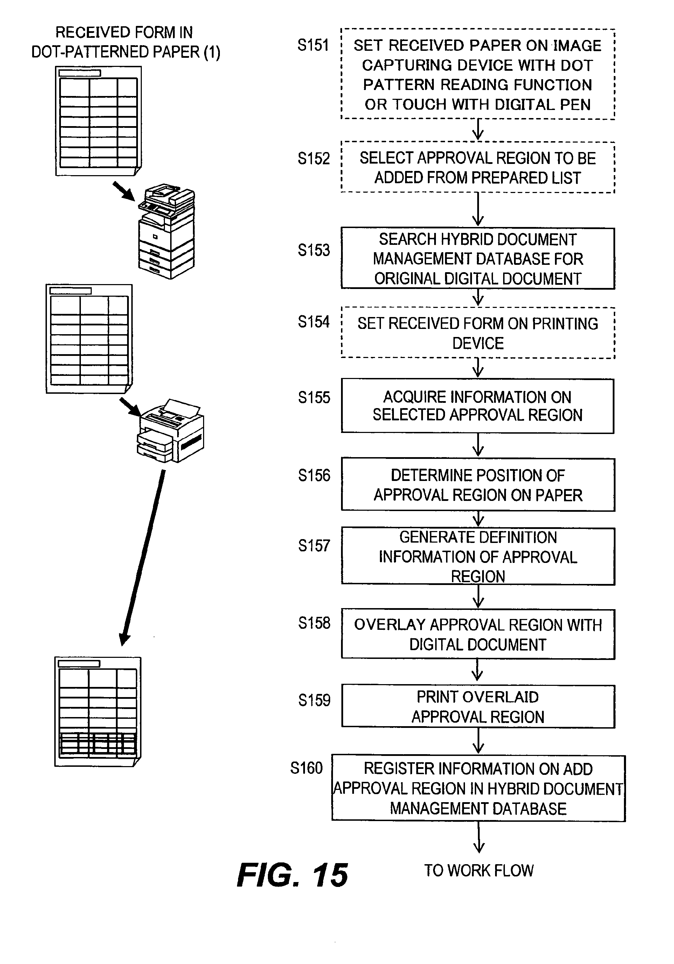

Fig. 11A shows an example of handling the form to be added into the workflow in the form of paper. In a case where a paper form without the approval region is processed according to the workflow, a process according to the workflow is performed after the approval region is provided by a stamp and the like on the form to be added into the workflow. Meanwhile, in this embodiment, as shown in Fig. 13, the approval region and a dot pattern are printed together and the definition information of the approval region is registered. Alternatively, as shown in Fig. 15, the approval region is printed and the definition information of the approval region is registered.

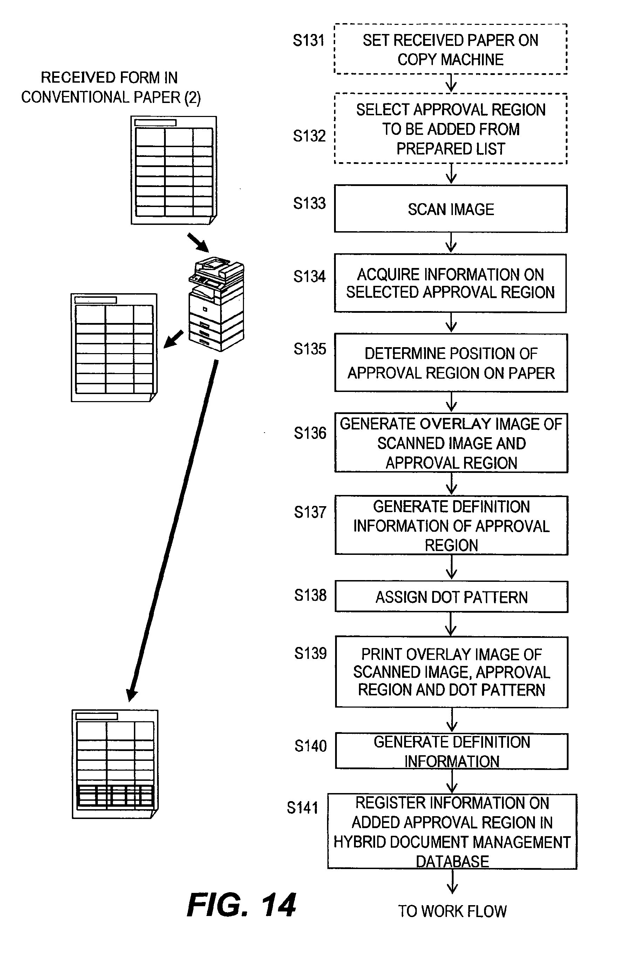

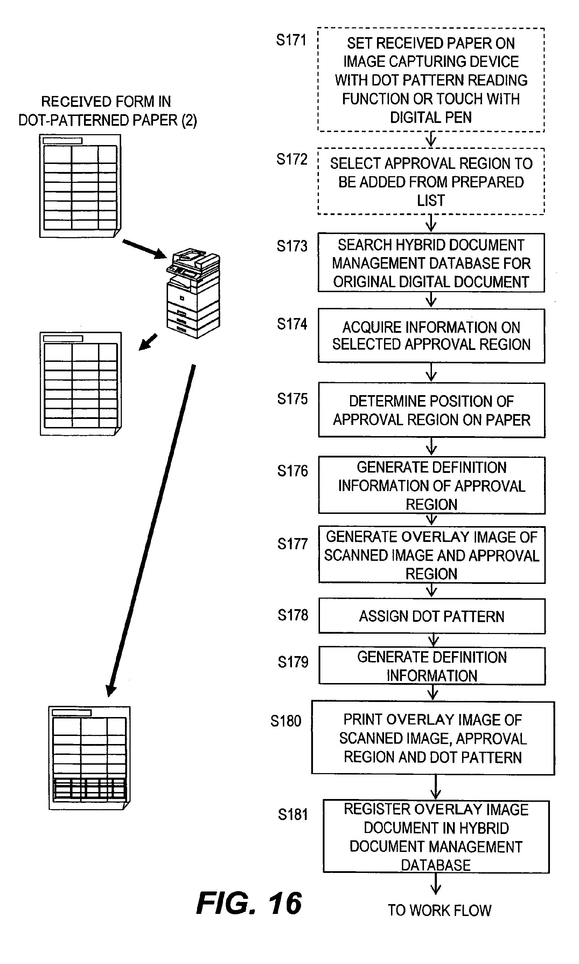

Fig. 11B shows an example of another way of handling the form to be added into the workflow in the form of paper. In a case where a paper form without the approval region is processed according to the workflow, the form to be added into the workflow is copied by a copy machine. The original form to be added into the workflow is kept. After the approval region is provided on the copied form by the stamp and the like, a process according to the workflow is performed. Meanwhile, in this embodiment, as shown in Fig. 14, the approval region and a dot pattern are printed together and the definition information of the approval region is registered. Alternatively, as shown in Fig. 16, the approval region is printed and the definition information of the approval region is registered.

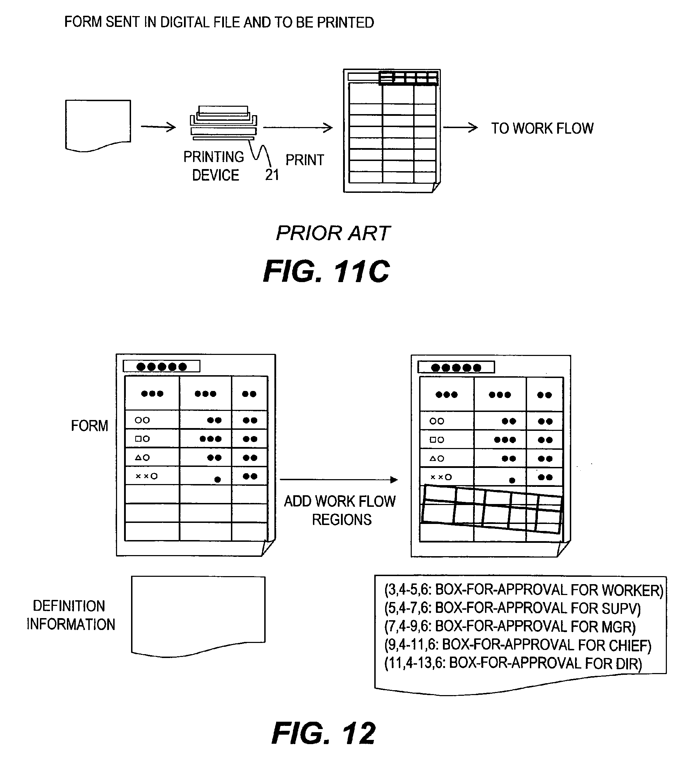

Fig. 11C shows an example of handling a form added into the workflow in the form of digital data. In a case where a form without the approval region is processed according to the workflow, a process is performed according to the workflow provided by the information management system of this embodiment after the approval region and the form are printed together.

Fig. 12 is an explanatory diagram showing a change in the form definition information stored in the form definition information 1711.

In Fig. 12, a change in the information which indicates a position of the approval region is shown in the form definition information stored in the form definition information 1711 in a case where an approval region is added on the form shown in Figs. 11A to 11C.

When an approval region is added to the form to be added into the workflow, coordinates of the added approval region are added to the form definition information. More specifically, coordinates of diagonal two points of each field in the approval region are added to the form definition information. Subsequently, the information management system acquires the status of the workflow by judging which boxes in the approval region is filled with signatures by determining whether the stroke information acquired by the digital pen 14 is included in the coordinate range of the approval region.

Fig. 13 is an example of preprocessing for adding the paper form into the workflow according to the embodiment of this invention. The preprocessing for handling the form (without a dot pattern) to be added into the workflow using the paper shown in Fig. 11A is shown. In the process shown in Fig. 13, the approval region and the dot pattern are printed on the original form.

First, a user instructs the form definition management server 17 to start the paper document scanning control program 1701 and sets the form to be added into the workflow on the image capturing device 22 (S111). At this time, the form definition management server 17 starts the approval region selection program 1704 to acquire templates of the approval region to be added to the form from the approval region template 1712, and displays a list of the acquired templates of the approval region to the user. The user then selects an approval region to be printed from the displayed list (S112).

Next, the form definition information generation program 1707 is started to generate definition information of the form to be scanned (S121). After that, when the user instructs the paper document scanning control program 1701 to start the scan, the image capturing device 22 scans an image of the form. The paper document scanning control program 1701 registers the scanned image of the form in the hybrid document management database 11 (S113).

Subsequently, the user sets the form to be added into the workflow on the printing device 21 (S114). The form definition management server 17 acquires the template data of the approval region selected in Step S112 from the approval region template 1712 (S115). Moreover, the form definition management server 17 starts the form position determination program 1705 to determine a position where the approval region is to be printed on the form (S 116). The determination process for positioning the approval region will be described later with reference to Fig. 18.

The form definition management server 17 starts the form definition element generation program 1706 to generate definition information of the approval region of which position has been determined (S117). At this time, the priority 17249 of the definition information generated later is set to be high. As will be described in Fig. 18, the approval region is overlaid in the area where characters are not written. Characters written on positions where plural form definitions are overlaid are associated with form definition having a high priority. Accordingly, characters written over other characters are associated with a new approval region to which the higher priority is set.

This definition information may include, other than information on the approval region to be newly printed, information on fields-to-be-filled-in of a form printed before added into the workflow. Note that, the information on the fields-to-be-filled-in of a form printed before added into the workflow can be analyzed using the position determining process (S116) for the approval region.

The form definition management server 17 requests the hybrid document management server 10 to allocate the dot pattern to be printed together with the form, and receives the allocated dot pattern from the hybrid document management server 10 (S118).

The form definition management server 17 overlays the approval region of which the position has been determined and the allocated dot pattern to generate an image to be printed on the form. Next, the printing control program 1702 is started to request the hybrid document management server 10 to print the generated image (the approval region and the dot pattern) to (S119). The hybrid document management server 10 transmits an instruction to print to the printing device 21.

Subsequently, the form definition management server 17 registers the definition information of the approval region generated in Step S 117 and the definition information of the form generated in Step S121 in the hybrid document management database 11 (S120).

Fig. 14 is another example of preprocessing for adding the paper form into the workflow according to the embodiment of this invention. The preprocessing for handling the form (without a dot pattern) to be added into the workflow using the paper shown in Fig. 11B is shown. In the process shown in Fig. 14, a form to which an approval region and a dot pattern are added is generated other than the original form.

First, the user instructs the form definition management server 17 to start the paper document scanning control program 1701 and sets the form to be added into the workflow on the image capturing device 22 (S131). At this time, the form definition management server 17 starts the approval region selection program 1704 to acquire templates of the approval region to be added to the form from the approval region template 1712, and displays a list of the acquired templates of the approval region to the user. The user then selects an approval region to be printed from the displayed list (S 132).

Next, when the user instructs the paper document scanning control program 1701 to start the scan, the image capturing device 22 scans an image of the form. The paper document scanning control program 1701 registers the scanned image of the form in the hybrid document management database 11 (S 133).

The form definition management server 17 acquires the template data of the approval region selected in Step S132 from the approval region template 1712 (S134). The form definition management server 17 starts the form position determination program 1705 to determine a position where the approval region is to be printed on the form (S135). The determination process for positioning the approval region will be described later with reference to Fig. 18.

The form definition management server 17 generates an overlay image of the form with the scanned form image and the approval region of which position has been determined (S136).

The form definition management server 17 starts the form definition element generation program 1706 to generate definition information of the approval region of which position has been determined (S137). At this time, the priority 17249 of the definition information generated later is set to be high. As will be described in Fig. 18, the approval region is overlaid in the area where characters are not written. Characters written on positions where plural form definitions are overlaid are associated with form definition having a high priority. Accordingly, characters written over other characters are associated with a new approval region to which the higher priority is set.

The definition information generated in Step S 137 may include, other than information of the approval region to be newly printed, information on fields-to-be-filled-in of a form printed before added into the workflow. Note that, the information on the fields-to-be-filled-in of a form printed before added into the workflow can be analyzed using the position determining process (S135) for the approval region.

The form definition management server 17 requests the hybrid document management server 10 to allocate the dot pattern to be printed together with the form, and receives the allocated dot pattern from the hybrid document management server 10 (S138).

The form definition management server 17 overlays the scanned image of the form with the approval region of which the position has been determined and the allocated dot pattern to generate an image of the form to be printed. Next, the printing control program 1702 is started to request the hybrid document management server 10 to print the generated image of the form (S139). The hybrid document management server 10 transmits an instruction to print to the printing device 21.

Then, the form definition management server 17 starts the form definition information generation program 1707 to generate definition information of the form which is newly printed (S140).

The form definition management server 17 registers the definition information of the approval region generated in Step S137 and the definition information of the form generated in Step S140 in the hybrid document management database 11 (S141).

Fig. 15 is another example of preprocessing for adding the paper form into the workflow according to the embodiment of this invention. The preprocessing for handling the form (with a dot pattern) to be added into the workflow using the paper shown in Fig. 11A is shown. In the process shown in Fig. 15, the approval region is printed on the original of the form.

First, a user instructs the form definition management server 17 to start the paper document scanning control program 1701. The form to be added into the workflow is then scanned by the image capturing device 22 (S151). The paper document scanning control program 1701 calculates absolute coordinates of the form by analyzing the added dot pattern onto the form from the scanned image. Subsequently, the paper document scanning control program 1701 acquires information on the scanned paper by inquiring the dot pattern management server 15.

The form to be added into the workflow having the dot pattern has been registered in the hybrid document management database 11, and thus, the digital data of the document can be acquired from the hybrid document management database 11 using the information on the paper acquired from the dot pattern.

Note that, without scanning the form by the image capturing device 22, the printed dot pattern on the paper can be acquired by the digital pen 14 as well as the information on the paper from the absolute coordinates of the form by starting the pen data acquisition program 1703.

The form definition management server 17 starts the approval region selection program 1704 to acquire the templates of the approval region to be added onto the form from the approval region template 1712, and displays a list of the acquired templates of the approval region to the user. The user then selects an approval region to be printed from the displayed list (S 152).

The form definition management server 17 searches the hybrid document management database 11 using the information (the document ID and the page number) on the document acquired in Step S151 in order to acquire the digital data of the document (S 153).

Subsequently, the user sets the form to be added into the workflow on the printing device 21 (S154). The form definition management server 17 acquires the template data of the approval region selected in Step S 152 from the approval region template 1712 (S155). Moreover, the form definition management server 17 starts the form position determination program 1705 to determine a position where the approval region is to be printed on the form (S156). The determination process for positioning the approval region will be described later with reference to Fig. 18.

The form definition management server 17 starts the form definition element generation program 1706 to generate definition information of the approval region of which position has been determined (S157). At this time, the priority 17249 of the definition information generated later is set to be high. As will be described in Fig. 18, the approval region is overlaid in the area where characters are not written. Characters written on positions where plural form definitions are overlaid are associated with form definition having a high priority. Accordingly, characters written over other characters are associated with a new approval region to which the higher priority is set.

The form definition management server 17 generates an overlay image with the digital data of the document acquired from the hybrid document management database 11 and the approval region of which position has been determined (S 158).

The form definition management server 17 starts the printing control program 1702 to request the hybrid document management server 10 to print the approval region of which position has been determined (S159). The hybrid document management server 10 transmits an instruction to print to the printing device 21. Subsequently, the form definition management server 17 registers the information on the added approval region in the hybrid document management database 11 (S160).

Fig. 16 is yet another of preprocessing for adding the paper form into the workflow according to the embodiment of this invention. The preprocessing for handling the form (with a dot pattern) to be added into the workflow using the paper shown in Fig. 11B is shown. In the process shown in Fig. 15, a form to which an approval region and a dot pattern are added is generated other than the original form.

First, the user uses the image capturing device 22 to scan the form to be added into the workflow (S171). The paper document scanning control program 1701 analyzes the dot pattern added onto the form from the scanned image to calculate absolute coordinates of the form. Next, the paper document scanning control program 1701 acquires information (the document ID and the page number) on the scanned paper by inquiring the dot pattern management server 15.

Note that, the without scanning the form by the image capturing device 22, the printed dot pattern on the paper can be acquired by the digital pen 14 as well as the information on the paper from the absolute coordinates of the form by starting the pen data acquisition program 1703.

The form to be added into the workflow having the dot pattern has been registered in the hybrid document management database 11, and thus, the digital data of the document can be acquired from the hybrid document management database 11 using the information on the paper acquired from the dot pattern.

Note that, without scanning the form by the image capturing device 22, the printed dot pattern on the paper can be acquired by the digital pen 14 as well as the information on the paper from the absolute coordinates of the form by starting the pen data acquisition program 1703.

The form definition management server 17 starts the approval region selection program 1704 to acquire the templates of the approval region to be added onto the form from the approval region template 1712, and displays a list of the acquired templates of the approval region to the user. The user then selects an approval region to be printed from the displayed list (S 172).

The form definition management server 17 searches the hybrid document management database 11 using the information (the document ID and the page number) on the document acquired in Step S151 in order to acquire the digital data of the document (S173).

The form definition management server 17 acquires the template data of the approval region selected in Step S152 from the approval region template 1712 (S174). Moreover, the form definition management server 17 starts the form position determination program 1705 to determine a position where the approval region is to be printed on the form (S175). The determination process for positioning the approval region will be described later with reference to Fig. 18.

The form definition management server 17 starts the form definition element generation program 1706 to generate definition information of the approval region of which position has been determined (S176). At this time, the priority 17249 of the definition information generated later is set to be high. As will be described in Fig. 18, the approval region is overlaid in the area where characters are not written. Characters written on positions where plural form definitions are overlaid are associated with form definition having a high priority. Accordingly, characters written over characters are associated with a new approval region to which the higher priority is set.

The form definition management server 17 generates an overlay image with the digital data of the document acquired from the hybrid document management database 11 and the approval region of which position has been determined (S177).

The form definition management server 17 requests the hybrid document management server 10 to allocate the dot pattern to be printed together with the form, and receives the allocated dot pattern from the hybrid document management server 10 (S178).

The form definition management server 17 starts the form definition information generation program 1707 to generate definition information of the form which is newly printed (S179).

The form definition management server 17 starts the printing control program 1702 to overlay the digital data of the document acquired from the hybrid document management database 11, the approval region of which the position has been determined, and the allocated dot pattern to generate an image to be printed on the form. Next, the printing control program 1702 is started to request to the hybrid document management server 10 to print the generated image of the form (S180).

Subsequently, the form definition management server 17 registers the information of the added approval region in the hybrid document management database 11 (S181).

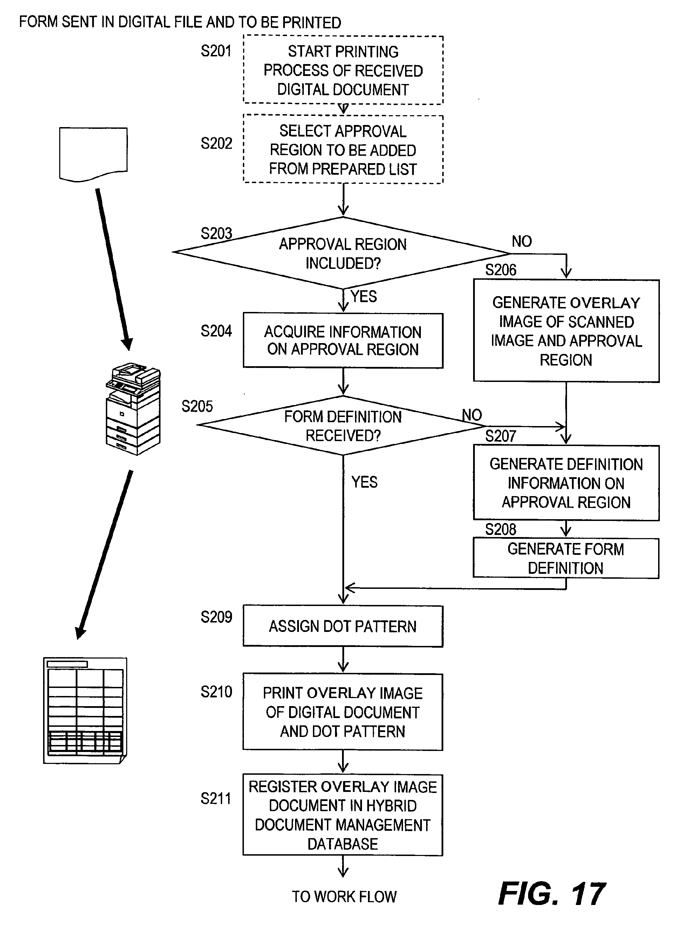

Fig. 17 is another example of preprocessing for adding the paper form into the workflow according to the embodiment of this invention. The preprocessing for handling the form to be added into the workflow using the digital data shown in Fig. 11C is shown. In the process shown in Fig. 17, a form to which an approval region and a dot pattern are added is added onto the form (without a dot pattern) to be added into the workflow in the form of the digital data is generated.

First, the user inputs an instruction to print the digital data of the form to be added into the workflow to the form definition management server 17 in order to start the printing control program 1702 (S201).

The form definition management server 17 starts the approval region selection program 1704 to acquire templates of the approval region to be added onto the form from the approval region template 1712 and displays a list of the acquired templates of the approval region to the user (S202).

The form definition management server 17 starts the region position determination program 1705, analyzes a structure of the form to be added into the workflow, and then judges whether the approval region is included in the form added into the workflow (S203).

As a result of the judgment, in a case where the approval region is judged to be not included in the form, the approval region selection program 1704 acquires the template data of the approval region selected in Step S202 from the approval region template 1712. Moreover, the form definition management server 17 starts the form position determination program 1705 to determine a position where the approval region is to be printed on the form. Subsequently, an overlay image of the digital data of the form with the approval region of which position has been determined is generated (S206).

The form definition management server 17 starts the form definition element generation program 1706 to generate definition information of the approval region of which position has been determined (S207). At this time, the priority 17249 of the definition information generated later is set to be high. As will be described in Fig. 18, the approval region is overlaid in the area where characters are not written. Characters written on positions where plural form definitions are overlaid are associated with form definition having a high priority. Accordingly, characters written over other characters are associated with a new approval region to which the higher priority is set.

The form definition management server 17 starts the form definition information generation program 1707 to generate definition information of the form to be added into the workflow, and then registers the generated definition information in the form definition information 1711 (S208).

On the other hand, as a result of the judgment in Step S203, in a case where the approval region is judged to be included in the form, the form definition information 1711 to acquire the definition information of the approval region is acquired from the form definition information 1711 (S204), and then judges whether the definition information of the form is acquired (S205). As a result of the judgment, in a case where the definition information of the form is not acquired, the process proceeds to Step S207 because the definition information of the form is not registered in the form definition information 1711. the form definition information generation program 1707 is started to generate definition information of the approval region (S207), and registers the definition information of the form in the form definition information 1711 (S208).

On the other hand, as a result of the judgment in Step S205, in a case where the definition information of the form is acquired, the process proceeds to Step S209 because the definition information of the form to be added into the workflow is registered in the form definition information 1711. Note that, although the definition information of the form is acquired, definition information of the approval region is generated similarly to Step S207 and the generated definition information of the approval region is registered in the form definition information 1711 in a case where the definition information of the approval region is not included in the definition information of the form.

Subsequently, the form definition management server 17 requests o the hybrid document management server 10 to allocate the dot pattern to be printed together with the form and receives the allocated dot pattern from the hybrid document management server 10 (S209).

The form definition management server 17 overlays the digital data of the form, the approval region of which the position has been determined, and the allocated dot pattern in order to generate an image of the form to be printed. Next, the printing control program 1702 is started to request the hybrid document management server 10 to print the generated image of the form (S210).

The form definition management server 17 registers the image of the form generated by overlaying the approval region on the dot pattern in the hybrid document management database 11 (S211).

Fig. 18 is a flowchart showing a process for determining a position of the approval region according to the embodiment of this invention. The process in the flowchart is performed in Step S 116 in Fig. 13, Step S 135 in Fig. 14, Step S156 in Fig. 15, Step S175 in Fig. 16 and Step S206 in Fig. 17.

First, the approval region selection program 1704 acquires the information on the selected approval region (specifically, a size of the approval region) from the approval region template 1712 (S221).

It is judged whether the selected approval region is entirely included in a blank area on the form (S222).

As a result of the judgment, in a case where the selected approval region is included in the blank area, the center of the blank area and the center of the approval region are calculated. Next, a position of the approval region where the center of the approval region and the center of the blank area overlays is calculated (S225), and the position determination process for the approval region is completed.

On the other hand, in a case where the selected approval region is not included in the blank area, the structure of the form is analyzed. Information on the form is separated into character information and non-character information (lines, for example) to identify an area where characters are not written (S223). It is judged whether the identified area (non-character area where character information is not written) entirely includes the selected approval region (S224).

As a result of the judgment, in a case where the approval region can be included in the non-character area, the center of the non-character area and the center of the approval region are calculated. Next, a position of the approval region where the center of the approval region and the center of the non-character area overlays is calculated (S226), and the position determination process for the approval region is completed.

On the other hand, in a case where the approval region cannot be included in the non-character area, a position where the non-character area and the approval region are least overlaid is calculated (S227), and the position determination process for the approval region is completed.

Moreover, in a case where the approval region is provided on the position where the character area and the non-character area overlay, a priority of the area where the position overlays with the approval region is acquired from the form definition information 1711. The approval region may be provided to overlay with the form definition element 1724 having a lower priority.

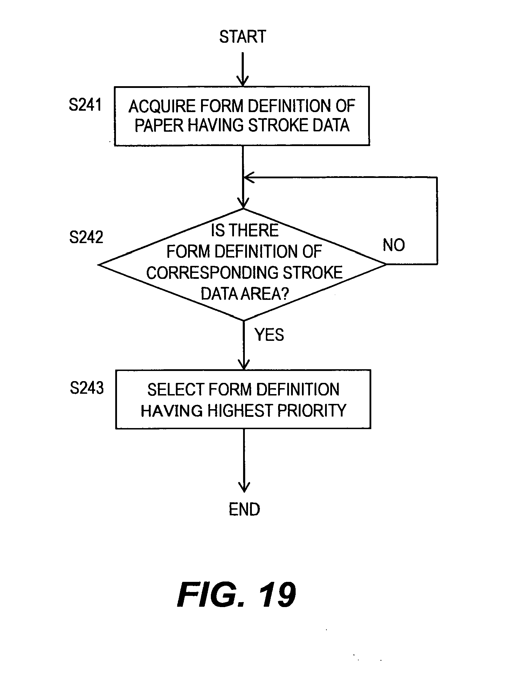

Fig. 19 is a flowchart showing a process for understanding the form definition according to the embodiment of this invention. The process in the flowchart is performed in Step S103 in Fig. 10.

First, the form definition information 1711 is searched using, as a key, the document ID and the page number of the paper of which stroke information is registered and form definition information is acquired (S241).

Subsequently, a form definition element overlaying with the stroke data area is extracted. More specifically, it is judged whether the corresponding rectangle coordinates 245 in the stroke set information 24 are included in the rectangle consisting of the area left-top X coordinate 17242, the area left-top Y coordinate 17243, the area right-bottom X coordinate 17244 and the area right-bottom Y coordinate 17245 in the form definition element 1724. In a case where the rectangle defined by the form definition element 1724 includes a rectangle defined by the stroke set information 24, the stroke (stroke data) is judged to be associated with the form definition element (S242).

Moreover, it is judged whether an overlay ratio of the rectangle defined by the corresponding rectangle coordinates 245 in the stroke set information 24 and the rectangle consisting of the area coordinates 17242 to 17245 in the form definition element 1724 is larger than a predetermined threshold (80%, for example). In a case where the ratio exceeds the predetermined threshold, the stroke (stroke data) is judged to be associated with the form definition element.

As a result of the judgment, in a case where one form definition element is judged to be associated with the stroke data, the one form definition element is judged to be an approval region to which the stroke data is written. However, in a case where plural form definition elements are judged to be associated with the stroke data, the priorities 17249 of the plural form definition elements are checked in order to determine the approval region to which the stroke data is written is the most-prioritized form definition. Note that, in this embodiment, larger priority values are prioritized.

While the present invention has been described in detail and pictorially in the accompanying drawings, the present invention is not limited to such detail but covers various obvious modifications and equivalent arrangements, which fall within the purview of the appended claims.

## Claims

1. An information management system comprising a first management server for managing form definition information including definition of a form which is used in a business process workflow, wherein the first management server is configured to:
determine an approval region to be added onto a form received in the form of paper;
determine a position where the determined approval region is to be printed on the form;
give an instruction to print the determined approval region at the determined position; and
register definition of the approval region to be printed in the form definition information.

2. The information management system according to Claim 1, further comprising an image capturing device for capturing an image of the form,
wherein the first management server is further configured to:
receive an instruction as to whether to keep an original of the received form;
obtain, in a case where the original of the received form is to be kept, the image of the form by using the image capturing device, give an instruction to print a form which is newly generated by overlaying the approval region on the obtained image of the form, and register definition of the form which is newly generated by the printing in the form definition information; and
give, in a case where the original of the received form is not to be kept, an instruction to print the determined approval region at the determined position on the original of the form, and register definition of the approval region to be printed in the form definition information of the original of the received form.

3. The information management system according to Claim 1, further comprising a coordinate obtaining device for identifying a paper media and a second management server for managing a digital document,
wherein, in a case where the received form is a paper media which can be identified by the coordinate acquisition device, the first management server is further configured to:
obtain an image of the form from the second management server; and
give an instruction to print a form which is newly generated by overlaying the approval region and the obtained image of the form.

4. The information management system according to Claim 3,
wherein the first management server is further configured to transmit the image of the form which is newly generated by overlaying the approval region on the obtained image of the form to the second management server.

5. The information management system according to Claim 1,
wherein the first management server is further configured to:
judge whether the approval region can be provided in a blank area of the received form when determining a position where the approval region is to be printed;
provide, in a case where the approval region can be provided in the blank area of the received form, the approval region in the blank area; and
assign, in a case where the approval region cannot be provided in the blank area of the received form, a highest priority of the definition of the approval region.

6. A form definition management server which is provided in an information management system, and which manages form definition information including definition of a form used in a business process workflow, the form definition management server being configured to:
determine an approval region to be added to a form received in the form of paper;
determine a position where the determined the approval region is to be printed on the form;
give an instruction to print the determined approval region at the determined position; and
register definition of the approval region to be printed in the form definition information.

7. The form definition management server according to Claim 6,
wherein the information management system further comprising an image capturing device for capturing an image of the form, and
wherein the form definition management server is further configured to:
receive an instruction as to whether to keep an original of the received form;
obtain, in a case where the original of the received form is to be kept, the image of the form by using the image capturing device, give an instruction to print a form which is newly generated by overlaying the approval region on the obtained image of the form, and register definition of the form which is newly generated by the printing in the form definition information; and
give, in a case where the original of the received form is not to be kept, an instruction to print the determined approval region at the determined position on the original of the form, and register definition of the approval region to be printed in the form definition information of the original of the received form.

8. The form definition management server according to Claim 6,
wherein the information management system further comprising a coordinate obtaining device for identifying a paper media and an information management server for managing a digital document, and
wherein, in a case where the received form is a paper media which can be identified by the coordinate acquisition device, the first management server is further configured to:
obtain an image of the form from the information management server; and
give an instruction to print a form which is newly generated by overlaying the approval region on the obtained image of the form.

9. The form definition management server according to Claim 8, being further configured to transmit the image of the form which is newly generated by overlaying the approval region on the obtained image of the form to the information management server.

10. The form definition management server according to Claim 6, being further configured to:
judge whether the approval region can be provided in a blank area of the received form when determining a position where the approval region is to be printed;
provide, in a case where the approval region can be provided in the blank area of the received form, the approval region in the blank area; and
assign, in a case where the approval region cannot be provided in the blank area of the received form, a highest priority of the definition of the approval region.

11. An information management method which manages form definition information including definition of a form used in a business process workflow, the information management method including the steps of:
determining an approval region to be added onto a form received in the form of paper;
determining a position where the determined the approval region is to be printed on the form;
giving an instruction to print the determined approval region at the determined position; and
registering definition of the approval region to be printed in the form definition information.
